# EUROPÄISCHE PATENTSCHRIFT

(11) **EP 2 588 793 B1**
(45) Veröffentlichungstag und Bekanntmachung des Hinweises auf die Patenterteilung: **06.04.2016**
(21) Anmeldenummer: 11748559.9
(22) Anmeldetag: 29.06.2011
(51) Int. Cl.: F16L 37/18, F16L 37/38

(54) **SCHNELLANSCHLUSS**
QUICK-ACTING CONNECTION
RACCORD RAPIDE

(30) Priorität: 30.06.2010 DE 102010025747
(43) Veröffentlichungstag der Anmeldung: 08.05.2013
(73) Patentinhaber: Weh, Erwin, 89257 Illertissen (DE); Weh, Wolfgang, 89257 Illertissen (DE)
(72) Erfinder: Weh, Erwin, 89257 Illertissen (DE); Weh, Wolfgang, 89257 Illertissen (DE)
(74) Vertreter: Fiener, Josef
(86) Internationale Anmeldenummer: PCT/EP2011/003194
(87) Internationale Veröffentlichungsnummer: WO 2012/000659

(56) Entgegenhaltungen:
- FR-A1- 2 686 680
- US-A- 5 060 982
- US-A- 5 575 510

## Beschreibung

Die Erfindung betrifft einen Schnellanschluss, insbesondere zum Füllen von Gasflaschen.

Ein derartiger Schnellanschluss ist aus der US 5,575,510 der Anmelder bekannt. Hierbei wird eine einfach zu bedienende und sichere Schnellanschluss-Kupplung beschrieben, die insbesondere zum Füllen von Gasflaschen eingesetzt wird. Hierbei werden vermehrt Gasflaschenventile mit höheren Federkräften eingesetzt, so dass auch die Druckfedern zur Erzeugung einer Vorspannung in der Schnellanschluss-Kupplung verstärkt werden, um einen einfachen Abschluss zu ermöglichen. Hierbei wird jedoch die Mechanik mit stärkeren Kräften beaufschlagt, insbesondere die Betätigungseinrichtung mit einer Steuerscheibe. Da diese in einem Rahmen um ca. 90° gedreht wird, treten mehrfach Linienberührungen auf, so dass die Steuerscheibe und der Rahmen bei hohen Federkräften einem erhöhten Verschleiß unterliegen und damit schwergängig werden können.

Daher liegt der Erfindung die Aufgabe zugrunde, einen Schnellanschluss der oben genannten Art zu schaffen, der einen sicheren und zuverlässigen Schnellanschluss, insbesondere geringeren Verschleiß ermöglicht.

Diese Aufgabe wird mit einem Schnellanschluss, insbesondere zum Füllen von Gasflaschen, mit den Merkmalen des Patentanspruches 1 gelöst. Bevorzugte Ausgestaltungen der Erfindung sind in den untergeordneten Ansprüchen angeführt.

Der Schnellanschluss ist bevorzugt mit Spannzangen versehen, um verschiedene Profile, wie Innengewinde, Außengewinde, Nuten und dgl. formschlüssig zu kuppeln. Das Spannzangenprofil ist dabei komplementär zu einem Eingriffsprofil gestaltet, beispielsweise einem Stutzen oder einem Gasflaschenventil-Anschlussgewinde. Der konstruktive Aufbau des erfindungsgemäßen Schnellanschlusses wird dadurch vereinfacht, dass die Schiebehülse unmittelbar mit dem Dichtkolben in Verbindung steht. Hierdurch reicht es in vorteilhafter Weise für die Betätigung des Schnellanschlusses aus, dass nur die Schiebehülse relativ zu dem Gehäuse verschoben wird, ohne dass ein direkter Angriff der Betätigungseinrichtung an dem Dichtkolben nötig wird. Die Schiebehülse ist bevorzugt mit dem Dichtkolben relativ bewegbar verbunden, um für den Dichtkolben eine optimale Abdichtung zu ermöglichen. Hierzu sind zwischen der Schiebehülse und dem Dichtkolben Bolzen vorgesehen, mit denen eine besonders einfache Montage erzielt wird. Der Dichtkolben ist zudem bevorzugt zum Auslass hin vorgespannt, wodurch optimale Dichtverhältnisse im Anschlussbereich durch einen zusätzlichen Anlagedruck verwirklicht werden können. Als Gegendruck für verstärkte Gasflaschenventile können somit auch hier stärkere Federn verwendet werden, wobei die Flächenpressung durch die erfindungsgemäße Verwendung von Kulissensteinen erheblich reduziert und damit auch der Verschleiß. Somit wird eine besonders langlebige und leichtgängige Kupplung geschaffen.

Bevorzugt ist die Betätigungseinrichtung als am Gehäuse gelagerter Schwenkhebel ausgebildet ist, insbesondere in Form eines Bügels, der über den Bereich das Gasflaschenventil schwenkbar ist. Hierdurch ergibt sich beim Anschluss an Gasflaschen eine einfache Handhabung, da der Bügel von beiden Seiten handhabbar ist. Der Bügel kann auch in Art eines abgekröpften Schwenkhebels ausgeformt sein. Der Schwenkhebel ist am Gehäuse auf der Gehäuselängsachse gelagert und aus einer Öffnungsstellung, die etwa senkrecht zur Gehäuselängsachse orientiert ist, um ca. 90° in eine Schließstellung schwenkbar. Diese Schwenkbewegung mit einer Verschiebebewegung der Schiebehülse erzielt eine gleichmäßige Kraftübersetzung, insbesondere wenn der Schwenkbügel an beiden Seiten des Gehäuses gelagert ist und eine Exzenterscheibe aufweist, die zur Bewegungsübertragung an die Schiebehülse dient. Hierzu greift die Exzenterscheibe über die Kulissensteine an einer Ausnehmung der Schiebehülse ein und erreicht damit eine besonders kompakte und leichtgängige Gestaltung der Bewegungsübertragung, die zudem wegen der reduzierten Flächenpressung eine hohe Lebensdauer ermöglicht.

Der jeweilige Kulissenstein ist hierbei z. B. in der Ausnehmung um 15 mm nach oben bzw. nach unten verschiebbar, so dass sich jeweils ein stabiler Endanschlag ergibt. Damit werden zugleich die Positionen der Öffnungsstellung bzw. der Schließstellung des Schwenkhebels in konstruktiv einfacher Weise definiert.

Weitere Einzelheiten und Vorteile der Erfindung ergeben sich aus der Beschreibung eines bevorzugten Ausführungsbeispiels der Erfindung unter Bezug auf die Zeichnungen. Hierbei zeigen:
Fig. 1 eine Seitenansicht eines Schnellanschlusses (mit Teilschnitt) in Anschlussstellung;
Fig. 2 eine Seitenansicht auf den in Fig. 1 gezeigten Schnellanschluss in Zwischenstellung;
Fig. 3 eine Seitenansicht wie in Fig. 1, aber in Öffnungsstellung des Schnellanschlusses; und
Fig. 4 eine Gesamtdarstellung des Schnellanschlusses wie in Fig. 3 (= Kreisausschnitt).

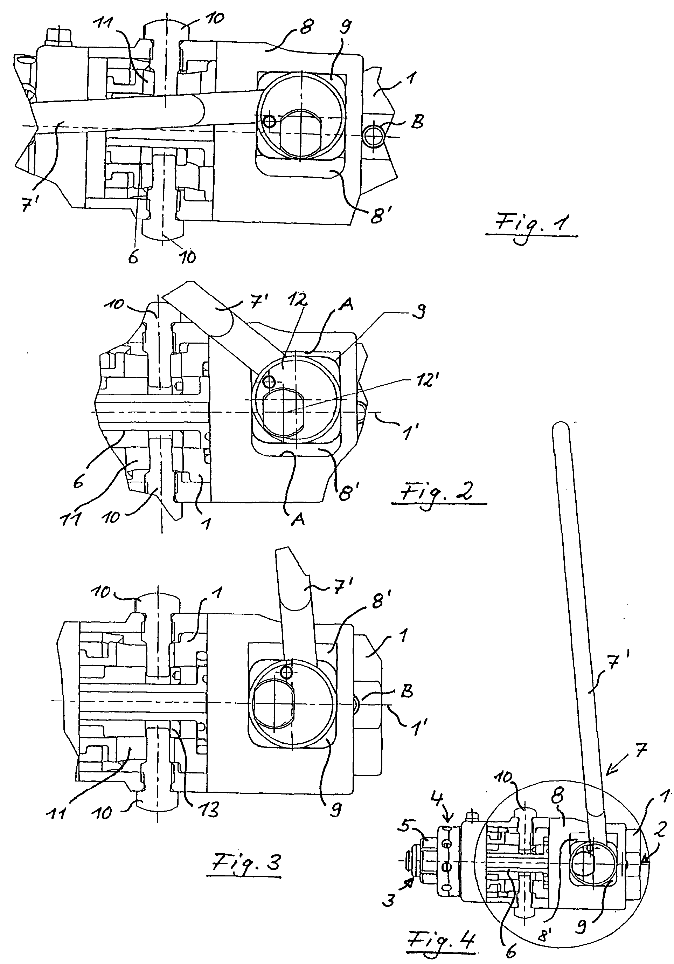

In Fig. 1 ist ein erstes Ausführungsbeispiel eines Schnellanschlusses gemäss der Erfindung in der Anschlussstellung gezeigt, wobei ein Anschlussstutzen bzw. ein Gasflaschenventil weggelassen ist. Der Schnellanschluss besteht aus einem Gehäuse 1 mit einem Einlass 2 und einem Auslass 3 (vgl. Fig. 4) für ein durch das Gehäuse 1 hindurch zu übertragendes Medium, insbesondere Gas. Am Einlass 2 ist ein Rohr oder ein Schlauch (nicht dargestellt) angeschlossen, das oder der das Medium, in diesem Falle Gas, von einer Gasquelle zuführt. Im Bereich des Auslasses 3 ist eine Schnellanschlussvorrichtung 4 vorgesehen, die bevorzugt aus Spannzangen 5, einem im Gehäuse 1 verschiebbaren Dichtkolben 6 und einer Betätigungseinrichtung 7 in Form eines Schwenkbügels 7' besteht. Eine Schiebehülse 8 ist am zylindrischen Gehäuse 1 geführt und mit einer hier nicht dargestellten Feder in Richtung zum Auslass 3 vorgespannt.

Wie in den Fig. 1 bis 3 gezeigt sind in die Schiebehülse 8 (hier von oben und unten her) Bolzen 10 eingeschraubt, die das Gehäuse 1 in einem Langloch 11 durchgreifen, das parallel zur Längsachse 1' des Gehäuses 1 orientiert ist. Die Bolzen 10 greifen mit ihren Enden in eine Nut 13 ein, die parallel zur Längsachse 1' im Dichtkolben 6 ausgerichtet ist. Der Dichtkolben 6 ist ebenfalls mit einer Feder (nicht dargestellt) in Richtung zum Auslass 3 hin vorgespannt, so dass zum Öffnen des Schnellanschlusses erhebliche Kräfte auf den Schwenkhebel 7' wirken. Dieser Aufbau entspricht grundsätzlich der eingangs genannten Patentschrift, ebenso die Anordnung und Betätigung der Spannzangen 5, so dass hierauf verwiesen werden kann.

Für das Verschieben der Schiebehülse 8 weist die Betätigungseinrichtung 7 einen Schwenkbügel 7' auf, der an gegenüberliegenden Seiten des Gehäuses 1 auf Höhe der Längsachse 1' schwenkbar gelagert ist und sich von dem Gehäuse 1 nach außen bis zu einer verbindenden Kreisbogenhälfte erweitert. Die Gestaltung des Schwenkbügels 7' ist derart bemessen, dass sie den jeweiligen Anwendungsfällen des Schnellanschlusses leicht angepasst werden kann. Bei dem dargestellten Ausführungsbeispiel dient die Form des Schwenkbügels 7' dazu, ein Verschwenken über einen Gasflaschenventilanschluss zu ermöglichen.

Der Schwenkbügel 7' ist in Fig. 3 in einer Öffnungsstellung gezeigt, in der er etwa senkrecht zur Längsachse 1' des Gehäuses 1 orientiert ist. Aus dieser Öffnungsstellung ist der Schwenkbügel 7' in die in den Fig. 1 dargestellte Anschlussstellung schwenkbar, wobei die Fig. 2 eine Zwischenstellung von etwa 45° zeigt. Dort befindet sich der Kulissenstein 9 in der Mitte der etwa 20% höheren Ausnehmung 8', so dass in der Anschlussstellung der Fig. 1 der Kulissenstein 9 oben anschlägt und in der Öffnungsstellung unten anschlägt, also Begrenzungsanschläge A gebildet sind, die ein Weiterbewegen des Schwenkbügels 7' unterbinden. Aufgrund dieser Schwenkbügelausrichtung in der Anschlussstellung der Fig. 1 liegt das äußere Ende des Schwenkbügels 7' zudem unterhalb der Längsmittelebene und bildet mit dieser einen spitzen Winkel. Diese Lagezuordnung bietet eine zusätzliche Sicherungsfunktion, zu der auch das Eigengewicht des Schwenkbügels 7' beiträgt.

Im Lagerungsbereich des Schwenkbügels 7' ist dieser an jeder Seite mit einer Exzenterscheibe 12 verstiftet, die exzentrisch zur Längsachse 1' (vgl. Fig. 1 und 2) sowie zu Befestigungsschrauben 12' gelagert ist sowie mit dem (hier ungefähr quadratischen) Kulissenstein 9 gekoppelt ist. Dieser ist in die (rechteckige) Ausnehmung 8' eingepasst, wobei diese etwa um den gewünschten Axialhub der Schiebehülse 8 höher ist. Die Gestaltung der Ausnehmung 8' ist so bemessen, dass die Exzenterscheibe 12 um etwa 90° drehen kann und Begrenzungsanschläge für die Öffnungsstellung (Fig. 3 und 4) und die Anschlussstellung (Fig. 1) bildet.

Die Funktion des Schnellanschlusses wird noch unter Bezug auf die Fig. 4 erläutert. In der in Fig. 4 gezeigten Öffnungsstellung (ebenso in Fig. 3) sind die Spannzangen 5 bereit zum Ankuppeln an einen Stutzen, insbesondere einer Gasflasche. Der Schwenkbügel 7' ist hochgeschwenkt, und demgemäss befindet sich die Schiebehülse 8 (hier nach rechts) zurück gezogenen Stellung. Dies ist auch aus dem Vergleich der Fig. 1 bis 3 ersichtlich, bei denen eine rechts gezeigte Bohrung B in Gehäuse 1 zunehmend abgedeckt ist. Die Bolzen 10 befinden sich im Langloch 11 an der hintersten Stellung (rechts), und der Dichtkolben 6 liegt unter Wirkung einer Feder an den Bolzen 10 an. Wenn der Schnellanschluss in seiner Öffnungsstellung nun an einen Stutzen oder an einen Gewindeanschluss angesetzt wird, schiebt dieser den Dichtkolben 6 in das Gehäuse 1, bis die Spannzangen 5 sich über dem Gewinde befinden und in dieses sicher eingreifen können. Die Bedienperson hält nun den Schnellanschluss in dieser Ansatzstellung und schwenkt den Bügel 7' bis in die in Fig. 1 gezeigte Stellung über das Gasflaschenventil hinweg. Bei dieser Schwenkbewegung des Bügels 7' wird durch den steuernden Eingriff der Exzenterscheibe 12 bzw. des Kulissensteins 9 in der Ausnehmung 8' die Schiebehülse 18 hier nach links in Richtung des Auslasses 3 gedrückt, wobei Schnellanschlussvorrichtung 4, insbesondere in Form der Spannzangen 15 verriegelt wird. Es versteht sich, dass die Spreizbewegung der Spannzangen 5 bei Innengewinden entgegengesetzt zu derjenigen bei Außengewinden oder Außenprofilen von Gasflaschenventilen ist. Bei Innengewinden kann auch eine Stirndichtung vorgesehen sein, um an einem Dichtsitz dichtend anzuliegen. Bei der beschriebenen Ausführung des Schnellanschlusses wird somit mit der Verschwenkbewegung um rund 90° einfach und zuverlässig eine sichere Schnellanschluss-Kupplung geschaffen, insbesondere zum Füllen von Gasflaschen, die zudem durch die breiten Anlageflächen des Kulissensteins eine hohe Langlebigkeit und geringen Verschleiß selbst bei hohen Federkräften sicherstellt.

## Patentansprüche

1. Schnellanschluss, insbesondere zum Füllen von Gasflaschen, bestehend aus einem Gehäuse (1) mit einem Einlass (2) und einem Auslass (3) für zu übertragendes Medium, sowie einer im Bereich des Auslasses (3) vorgesehenen Schnellanschlussvorrichtung (4), insbesondere mit Spannzangen (5), und mit einer Betätigungseinrichtung (7), die mittels einer Exzenterscheibe (12) in eine Ausnehmung (8') einer Schiebehülse (8) eingreift, **dadurch gekennzeichnet, dass** in der Ausnehmung (8') ein Kulissenstein (9) vorgesehen ist, der mit der Exzenterscheibe (12) gekoppelt ist und bei der Verschwenkung der Betätigungseinrichtung (7) zur Längsachse (1') des Gehäuses (1) quer verschiebbar ist.

2. Schnellanschluss nach Anspruch 1, **dadurch gekennzeichnet, dass** die Schiebehülse (8) mit einem Dichtkolben (6) axial bewegbar verbunden ist, insbesondere mittels Bolzen (10).

3. Schnellanschluss nach Anspruch 2, **dadurch gekennzeichnet, dass** der oder die Bolzen (10) zwischen Schiebehülse (8) und Dichtkolben (6) in eine Nut (13) eingreifen.

4. Schnellanschluss nach Anspruch 3, **dadurch gekennzeichnet, dass** die Schiebehülse (8) das Gehäuse (1) umgibt, wobei jeder Bolzen (10) zur Koppelung mit dem Dichtkolben (6) ein Langloch (11) im Gehäuse (1) durchgreift.

5. Schnellanschluss nach einem der vorangehenden Ansprüche, **dadurch gekennzeichnet, dass** die Betätigungseinrichtung (7) einen am Gehäuse (1) gelagerten Schwenkbügel (7') aufweist, der insbesondere symmetrisch an beiden Seiten des Gehäuses (1) auf der Längsachse (1') gelagert ist.

6. Schnellanschluss nach Anspruch 5, **dadurch gekennzeichnet, dass** der Schwenkbügel (7') aus einer Öffnungsstellung, die etwa senkrecht zur Längsachse (1') ausgerichtet ist, um etwa 90° in eine Anschlussstellung schwenkbar ist, in der der Schwenkhebel (7') etwa parallel zur Längsachse (1') verläuft.

7. Schnellanschluss nach einem der Ansprüche 1 bis 6, **dadurch gekennzeichnet, dass** der Kulissenstein (9) annähernd quadratisch ist und in die rechteckig ausgeformte Ausnehmung (8') mit Spiel eingepasst ist, das etwa dem Axialhub der Schiebehülse (8) entspricht.

8. Schnellanschluss nach einem der Ansprüche 1 bis 7, **dadurch gekennzeichnet, dass** die Ausnehmung (8') Begrenzungsanschläge (A) für den Kulissenstein (9) bildet.

## Claims

1. Quick connection, in particular for filling gas bottles, consisting of a housing (1) having an inlet (2) and an outlet (3) for medium to be transferred, and a quick-connection device (4) in the area of the outlet (3), in particular with collets (5), and having an actuating device (7) engaging in a recess (8') of a sliding sleeve (8) by means of an eccentric disk (12),
**characterized in that**
a sliding block (9) is provided in the recess (8') and is coupled with the eccentric disk (12) for displacement transversely to the longitudinal axis (1') of the housing (1) on pivoting of the actuating device (7).

2. Quick connection according to claim 1, **characterized in that** the sliding sleeve (8) is connected to a sealing piston (6) in an axial movable way, in particular by bolts (10).

3. Quick connection according to claim 2, **characterized in that** the or each bolt (10) between the sliding sleeve (8) and the sealing piston (6) engages in a groove (13).

4. Quick connection according to claim 3, **characterized in that** the sliding sleeve (8) surrounds the housing (1), wherein each bolt (10) for coupling with the sealing piston (6) passes through a slot (11) in the housing (1).

5. Quick connection according to one of the preceding claims, **characterized in that** the actuating device (7) comprises a pivot lever (7') mounted on the housing (1), in particular in a symmetrical way on both sides of the housing (1) and the longitudinal axis (1').

6. Quick connection according to claim 5, **characterized in that** the pivot lever (7') is pivotable around 90° from an open position which is approximately perpendicular to the longitudinal axis (1') to a connection position, in which the pivot lever (7') is approximately parallel to the longitudinal axis (1').

7. Quick connection according to one of claims 1 to 6, **characterized in that** the sliding block (9) is approximately square and fitted in the rectangular shaped recess (8') with play, which is about the axial stroke of the sliding sleeve (8).

8. Quick connection according to one of claims 1 to 7, **characterized, in that** the recess (8') forms limiting stops (A) for the sliding block (9).

## Revendications

1. Raccord rapide, en particulier pour le remplissage de bouteilles de gaz, constitué d'un boîtier (1) comprenant une entrée (2) et une sortie (3) pour un milieu à transférer et un dispositif formant raccord rapide (4) prévu dans la zone de la sortie (3), en particulier muni de pinces de serrage (5), ainsi qu'un dispositif d'actionnement (7) qui s'engage dans un évidement (8') d'un manchon coulissant au moyen d'un disque excentrique (12),
**caractérisé en ce**
**qu'**un coulisseau (9) est prévu dans l'évidement (8'), qui est couplé excentriquement au disque excentrique (12) et est déplaçable transversalement à l'axe longitudinal (1') du boîtier (1) lors du pivotement du dispositif d'actionnement (7).

2. Raccord rapide selon la revendication 1, **caractérisé en ce que** le manchon coulissant (8) est relié de manière mobile axialement à un piston d'étanchéité (6), en particulier au moyen de boulons (10).

3. Raccord rapide selon la revendication 2, **caractérisé en ce que** le ou les boulon(s) (10) s'engage(nt) dans une rainure (13) entre le manchon coulissant (8) et le piston d'étanchéité (6).

4. Raccord rapide selon la revendication 3, **caractérisé en ce que** le manchon coulissant (8) entoure le boîtier (1), chaque boulon (10) traversant un trou oblong (11) dans le boîtier (1) aux fins de couplage avec le piston d'étanchéité (6).

5. Raccord rapide selon l'une des revendications précédentes, **caractérisé en ce que** le dispositif d'actionnement (7) présente un étrier pivotant (7') monté sur le boîtier (1), qui est en particulier monté symétriquement des deux côtés du boîtier (1) sur l'axe longitudinal (1').

6. Raccord rapide selon la revendication 5, **caractérisé en ce que** l'étrier pivotant (7') peut pivoter d'une position d'ouverture, qui est orientée à peu près perpendiculairement à l'axe longitudinal (1'), d'environ 90° dans une position de raccordement dans laquelle le levier pivotant (7') s'étend à peu près parallèlement à l'axe longitudinal (1').

7. Raccord rapide selon l'une des revendications 1 à 6, **caractérisé en ce que** le coulisseau (9) est approximativement carré et adapté dans l'évidement (8') de forme rectangulaire avec un jeu qui correspond à peu près à la course axiale du manchon coulissant (8).

8. Raccord rapide selon l'une des revendications 1 à 7, **caractérisé en ce que** l'évidement (8') forme des butées de limitation (A) pour le coulisseau (9).
